# EUROPÄISCHE PATENTSCHRIFT

(11) **EP 1 342 648 B1**
(45) Veröffentlichungstag und Bekanntmachung des Hinweises auf die Patenterteilung: **01.02.2012**
(21) Anmeldenummer: 03004576.9
(22) Anmeldetag: 28.02.2003
(51) Int. Cl.: B62D 15/02

(54) **Vorrichtung zur Erfassung einer Drehwinkeländerung einer Lenksäule**
Rotation detecting device for a steering shaft
Système pour mesurer l'ampleur des rotations d'une colonne de direction

(30) Priorität: 08.03.2002 DE 10210363
(43) Veröffentlichungstag der Anmeldung: 10.09.2003
(73) Patentinhaber: GM Global Technology Operations LLC, Detroit, MI 48265-3000 (US)
(72) Erfinder: Jung, Frank, 65552 Limburg (DE)
(74) Vertreter: Strauss, Peter

(56) Entgegenhaltungen:
- DE-A1- 4 008 105
- DE-A1- 19 820 774
- JP-A- 5 187 889
- JP-A- 11 125 537
- JP-A- 2000 088 605

## Beschreibung

Die Erfindung bezieht sich auf eine Vorrichtung zur Erfassung einer Drehwinkeländerung einer Lenksäule eines Kraftfahrzeuges mit einem mit der Lenksäule zusammenwirkenden Lenkwinkelsensor sowie einem Elektromotor einer Servolenkeinrichtung, die mit einem elektronischen Lenkungssteuergerät gekoppelt sind.

Die DE 39 08 217 C2 offenbart eine Steuereinrichtung zum Steuern einer elektrischen Servolenkeinrichtung eines Kraftfahrzeuges, bei der der einem Elektromotor zugeführte Sollstrom in Abhängigkeit von dem über eine Lenkspindel übertragenen Drehmoment gesteuert wird und die Servolenkeinrichtung durch den Elektromotor unterstützt wird. Die Steuereinrichtung weist einen Lenkwinkelsensor zur Erfassung von Drehwinkeländerungen der Lenksäule beim Einschlagen des Lenkrades auf. Darüber hinaus umfasst die Steuereinrichtung eine Vorrichtung, die einen Zustand ermittelt, in dem der Lenkwinkel einen Wert annimmt, der einem vorbestimmten Winkel entspricht oder diesen übersteigt. Um eine Überhitzung verschiedener Elemente der elektrischen Servolenkeinrichtung zu vermeiden, wird ein aktueller Strom des Elektromotors als ein Begrenzungsstrom gespeichert und mit dem Sollstrom verglichen. Der geringere der beiden Ströme wird selektiert und zur Steuerung der elektrischen Servolenkeinrichtung verwendet. Diese Steuereinrichtung arbeitet lediglich bei eingeschalteter Zündung im Betriebszustand des Kraftfahrzeuges.

Die DE 40 08 105 A1 zeigt ein Lenksensorsystem für ein Fahrzeug, das einen Mikrocomputer umfasst, der einen Lenkwinkel in einer normalen Betriebsart, die einem Betriebszustand entspricht, ansprechend auf ein Signal von einem Lenksensor aufgrund einer Drehung einer Lenkwelle berechnet. Bei einer ausgeschalteten Zündung wechselt der Mikrocomputer von dem Betriebszustand in einen Ruhezustand nach einer bestimmten Ausschaltzeit eines Zündschalters des Fahrzeuges. In dem Ruhezustand ist eine Schaltung zum Erfassen von Lenkwinkelabweichungen aktiviert, die in Abhängigkeit von der Abweichung des Lenkwinkels ein Triggersignal erzeugt, um von dem Ruhezustand in den Betriebszustand zu wechseln.

Im Weiteren offenbart die JP 11125537 A einen nach Art eines Elektromotors aufgebauten Lenkwinkelsensor, der nach dem magnetischen Prinzip arbeitet und eine Spannung in Abhängigkeit von einer Drehung des Lenkrades erzeug, wobei die Spannung auf den Lenkwinkel schließen lässt. Darüber hinaus ist aus der DE 198 20 774 A1 ein Lenkwinkelsensor bekannt, der als elektrische Maschine ausgebildet ist, die zur Erzeugung eines Lenksignals generatorisch arbeitet.

Schließlich ist aus der Praxis ein elektronisches Stabilisierungsprogramm (ESP) für ein Kraftfahrzeug bekannt. Ein Lenkwinkelsensor und je ein Drehzahlsensor an den Rädern überwachen permanent die vom Fahrer gewünschte Fahrtrichtung. Ein Gierwinkelsensor und Querbeschleunigungssensoren überwachen permanent die tatsächliche Fahrtrichtung des Kraftfahrzeuges. Das elektroni sche Stabilisierungsprogramm greift bei gravierenden Abweichungen zwischen den abgeglichenen ermittelten Daten selbsttätig in den Fahrbetrieb ein, in dem es einzelne Räder zur Stabilisierung des Kraftfahrzeuges bremst.

Sowohl die elektrische Servolenkung als auch das elektronische Stabilisierungsprogramm verwenden Signale von Lenkwinkelsensoren bezüglich der Drehwinkeländerung der Lenksäule, wobei die Anforderungen an die Art und Qualität der Signale unterschiedlich sind. Im Zusammenhang mit der elektrischen Servolenkung finden relativ kostengünstige Lenkwinkelsensoren Verwendung, bei denen sich ein Ausgangssignal zyklisch wiederholt. Der tatsächliche Lenkwinkel wird durch einen Kalibrieralgorithmus berechnet. Bei einer Drehwinkeländerung des Lenkrades und damit auch der Lenksäule bei ausgeschalteter Zündung ist es zur Bereitstellung der korrekten Lenkwinkelinformation erforderlich, zunächst den Kalibrieralgorithmus zu durchlaufen. Zur Erfassung von Drehwinkeländerungen der Lenksäule werden insbesondere bei elektronischen Stabilisierungsprogrammen Lenkwinkelsensoren verwendet, die auch bei einer Mehrfachumdrehung des Lenkrades stets den korrekten Lenkwinkel liefern. Solche Lenkwinkelsensoren werden Multiturn-Lenkwinkelsensoren genannt und weisen einen komplexen Aufbau auf, weshalb sie relativ teuer sind. Bei ausgeschalteter Zündung werden die unterschiedlichen Lenkwinkelsensoren sowie ein jeweils damit gekoppeltes Lenkungssteuergerät in einen Ruhezustand versetzt, in dem sie einen relativ geringen Ruhestrom aufnehmen. Eine permanente Stromversorgung, die einen dauerhaft aktivierten Zustand und damit eine Erfassung einer Drehwinkeländerung der Lenksäule bei ausgeschalteter Zündung bewirken würde, ist aufgrund der Höhe des dafür benötigten Stromes nicht möglich.

Es ist Aufgabe der Erfindung, eine Vorrichtung der eingangs genannten Art zu schaffen, die eine Erfassung einer Drehwinkeländerung bei einer ausgeschalteten Zündung sicherstellt und dabei kostengünstig aufgebaut ist.

Erfindungsgemäß wird die Aufgabe dadurch gelöst, dass der Elektromotor und das Lenkungssteuergerät mit einer Auswertelektronik verbunden sind, die bei einer ausgeschalteten Zündung ein durch eine Drehwinkeländerung von dem Elektromotor erzeugtes Spannungssignal registriert und das Lenkungssteuergerät sowie den Lenkwinkelsensor zur Erfassung der Drehwinkeländerung aus einem Ruhezustand in einen Betriebszustand versetzt.

Somit kann der Einbau eines relativ teueren Lenkwinkelsensors, eines so genannten Multiturn-Lenkwinkelsensors, der eine Drehwinkeländerung des Lenkrades, respektive der Lenksäule, über mehrere Umdrehungen mit unterschiedlichen Signalen erfasst, ebenso entfallen, wie das nach den Einschalten der Zündung erfolgende Kalibrieren eines Lenkwinkelsensors bei dem sich ein Drehwinkelsignal zyklisch, beispielsweise in 180° oder 360° Schritten, wiederholt. Die erfasste Drehwinkeländerung steht sofort nach dem Einschalten der Zündung zur Verfügung, wobei die Auswertelektronik relativ kostengünstig zu fertigen ist. Der Elektromotor der elektrischen Servolenkung liefert das Spannungssignal aufgrund seiner Eigenschaft als Generator, wenn er durch eine Drehung der Lenksäule angetrieben wird. Der kurzzeitige Betriebszustand des Lenkungssteuergerätes sowie des Lenkwinkelsensors zur Erfassung der Drehwinkeländerung lässt mit einem kon ventionellen Bordnetz realisieren. Falls kein vom Elektromotor geliefertes Spannungssignal von der Auswertelektronik registriert wird, bleiben das Lenkungssteuergerät und der Lenkwinkelsensor im Ruhezustand, in dem eine geringe Ruhestromaufnahme stattfindet.

Zweckmäßigerweise versetzt die Auswertelektronik das Lenkungssteuergerät sowie den Lenkwinkelsensor nach der Erfassung der Drehwinkeländerung in den Ruhezustand. Die Auswerteelektronik steuert somit das Verhalten von Lenkungssteuergerät und Lenkwinkelsensor bei ausgeschalteter Zündung.

Damit nicht bereits bei geringsten Spannungsschwankungen oder Spannungsstörungen das Lenkungssteuergerät und der Lenkwinkelsensor in den Betriebszustand versetzt werden, wertet vorteilhafterweise die Auswertelektronik das Spannungssignal nach seinem Betrag und/oder Vorzeichen aus und versetzt in Abhängigkeit von einem vorgegebenen Schwellenwert das Lenkungssteuergerät sowie den Lenkwinkelsensor in den Betriebszustand.

Um das Lenkungssteuergerät und den Lenkwinkelsensor aus dem Ruhezustand in den Betriebszustand zu versetzen und umgekehrt, ist vorzugsweise die Auswertelektronik über eine Reizleitung mit dem Lenkungssteuergerät verbunden. Zweckmäßigerweise versorgt die Auswertelektronik das Lenkungssteuergerät mit Spannung.

Zur Realisierung eines kompakten Aufbaus ist die Auswertelektronik in das Lenkungssteuergerät integriert.

In weiterer Ausgestaltung der Erfindung berechnet und speichert das Lenkungssteuergerät einen aktualisierten Lenkwinkelwert aufgrund der Drehwinkeländerung. Der absolute Lenkwinkelwert, der die Stellung eines Rades zur Fahrzeuglängsachse repräsentiert, dient als Grundlage zur Berechnung weiterer, sich aufgrund von Drehwinkeländerungen der Lenksäule ebenfalls ändernder Lenkwinkelwerte.

Es versteht sich, dass die vorstehend genannten und nachstehend noch zu erläuternden Merkmale nicht nur in der jeweils angegebenen Kombination, sondern auch in anderen Kombinationen verwendbar sind, ohne den Rahmen der vorliegenden Erfindung zu verlassen; dieser Rahmen wird von den Ansprüchen definiert.

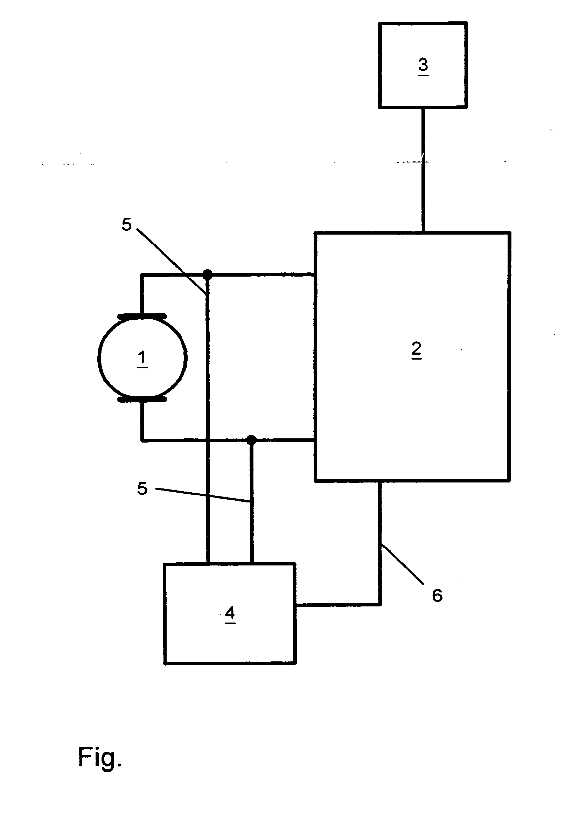

Die Erfindung wird im Folgenden anhand eines Ausführungsbeispieles unter Bezugnahme auf die zugehörige Zeichnung näher erläutert. Die einzige Fig. zeigt eine schematische Darstellung der erfindungsgemäßen Vorrichtung.

Die Vorrichtung umfasst einen Elektromotor 1 einer elektrischen Servolenkung eines Kraftfahrzeuges, der mit einem Lenkungssteuergerät 2 gekoppelt ist, das wiederum mit einem Lenkwinkelsensor 3 zur Erfassung von Drehwinkeländerungen einer von dem Elektromotor 1 beaufschlagten Lenksäule in Verbindung steht. Darüber hinaus ist eine Auswerteelektronik 4 vorgesehen, die an spannungsführende, zum Lenkungssteuergerät 2 führende Leitungen 5 des Elektromotors 1 angeschlossen ist und über eine Reizleitung 6 das Lenkungssteuergerät 2 beaufschlagt.

Bei ausgeschalteter Zündung befinden sich das Lenkungssteuergerät 2 und der Lenkwinkelsensor 3 in einem Ruhezustand, in dem sie einen relativ geringen Ruhestrom aus dem Bordnetz aufnehmen. Bei einer Drehung eines mit der Lenksäule verbundenen Lenkrades wird der Elektromotor 1 ebenfalls in Rotation versetzt und wirkt hierbei als Generator. Das Spannungssignal des Elektromotors 1 wird von der Auswerteelektronik 4 erfasst und ausgewertet. Daraufhin steuert die Auswerteelektronik 4 über die Reizleitung 6 das Lenkungssteuergerät 2 an und versetzt dieses sowie den Lenkwinkelsensor in einen Betriebszustand, um die Drehwinkeländerung des Lenkrades zu erfassen. Das Lenkungssteuergerät 2 errechnet anschließend einen neuen Wert für einen Lenkwinkel und speichert diesen Wert ab. Falls keine durch Drehwinkeländerungen des Lenkrades verursacheten Spannungssignale von der Auswerteelektronik 4 erfasst werden, versetzt die Auswerteelektronik 4 das Lenkungssteuergerät 2 und den Lenkwinkelsensor 3 wieder in den Ruhezustand. Der im Lenkungssteuergerät 2 gespeicherte neue Wert für den Lenkwinkel dient als Grundlage zur Berechnung weiterer Werte die sich auf Grund von Drehwinkeländerungen der Lenksäule sowohl bei ausgeschalteter als auch bei eingeschalteter Zündung ergeben.

### Bezugszeichenliste

- 1.: Elektromotor
- 2.: Lenkungssteuergerät
- 3.: Lenkwinkelsensor
- 4.: Auswertelektronik
- 5.: Leitung
- 6.: Reizleitung

## Patentansprüche

1. Vorrichtung zur Erfassung einer Drehwinkeländerung einer Lenksäule eines Kraftfahrzeuges mit einem mit der Lenksäule zusammenwirkenden Lenkwinkelsensor (3) sowie einem Elektromotor (1) einer Servolenkeinrichtung, die mit einem elektronischen Lenkungssteuerge rät (2) gekoppelt sind, **dadurch gekennzeichnet, dass** der Elektromotor (1) und das Lenkungssteuergerät (2) mit einer Auswertelektronik (4) verbunden sind, die bei einer ausgeschalteten Zündung ein durch eine Drehwinkeländerung von dem als generator arbeitenden Elektromotor (1) erzeugtes Spannungssignal registriert und das Lenkungssteuergerät (2) sowie den Lenkwinkelsensor (3) zur Erfassung der Drehwinkeländerung aus einem Ruhezustand in einen Betriebszustand versetzt.

2. Vorrichtung nach Anspruch 1, **dadurch gekennzeichnet, dass** die Auswertelektronik (4) das Lenkungssteuergerät (2) sowie den Lenkwinkelsensor (3) nach der Erfassung der Drehwinkeländerung in den Ruhezustand versetzt.

3. Vorrichtung nach Anspruch 1 oder 2, **dadurch gekennzeichnet, dass** die Auswertelektronik (4) das Spannungssignal nach seinem Betrag und/oder Vorzeichen auswertet und in Abhängigkeit von einem vorgegebenen Schwellenwert das Lenkungssteuergerät (2) sowie den Lenkwinkelsensor (3) in den Betriebszustand versetzt.

4. Vorrichtung nach einem der Ansprüche 1 bis 3, **dadurch gekennzeichnet, dass** die Auswertelektronik (4) über eine Reizleitung (6) mit dem Lenkungssteuergerät (2) verbunden ist.

5. Vorrichtung nach einem der Ansprüche 1 bis 4, **dadurch gekennzeichnet, dass** die Auswertelektronik (4) das Lenkungssteuergerät (2) mit Spannung versorgt.

6. Vorrichtung nach einem der Ansprüche 1 bis 5, **dadurch gekennzeichnet, dass** die Auswertelektronik (4) in das Lenkungssteuergerät (2) integriert ist.

7. Vorrichtung nach einem der Ansprüche 1 bis 6, **dadurch gekennzeichnet, dass** das Lenkungssteuergerät einen aktualisierten Lenkwinkelwert aufgrund der Drehwinkeländerung berechnet und speichert.

## Claims

1. An apparatus for detecting a change in the angle of rotation of a steering column of a motor vehicle, comprising a steering-angle sensor (3) cooperating with the steering column and an electromotor (1) of a power-steering device, which are coupled with an electronic steering control device (2), **characterized in that** the electromotor (1) and the steering control device (2) are connected with an electronic evaluation system (4), which when the ignition is switched off registers a voltage signal generated as a result of a change in the angle of rotation by the electric motor (1) operating as a generator and shifts the steering control device (2) and the steering-angle sensor (3) from an idle state into an operating state for the purpose of detecting the change in the angle of rotation.

2. An apparatus according to claim 1, **characterized in that** the electronic evaluation system (4) shifts the steering control device (2) and the steering-angle sensor (3) to the idle state after detecting the change in the angle of rotation.

3. An apparatus according to claim 1 or 2, **characterized in that** the electronic evaluation system (4) evaluates the voltage signal according to its rate and/or sign and shifts the steering control device (2) and the steering-angle sensor (3) to the idle position depending on a predetermined threshold value.

4. An apparatus according to one of the claims 1 to 3, **characterized in that** the electronic evaluation system (4) is connected via an initiating line (6) with the steering control device (2).

5. An apparatus according to one of the claims 1 to 4, **characterized in that** the electronic evaluation system (4) supplies the steering control device (2) with voltage.

6. An apparatus according to one of the claims 1 to 5, **characterized in that** the electronic evaluation system (4) is integrated in the steering control device (2).

7. An apparatus according to one of the claims 1 to 6, **characterized in that** the steering control device calculates and stores an updated steering-angle value on the basis of the change in the angle of rotation.

## Revendications

1. Dispositif pour capter un changement d'angle de direction d'une colonne de direction d'un véhicule à moteur avec un capteur d'angle de direction (3) coopérant avec la colonne de direction et avec un moteur électrique (1) d'un dispositif de direction assistée, qui sont couplés à un appareil électronique de commande de direction (2), **caractérisé en ce que** le moteur électrique (1) et l'appareil de commande de direction (2) sont reliés à une électronique d'interprétation (4) qui enregistre, lorsque l'allumage est hors tension, un signal de tension produit par un changement d'angle de rotation du moteur électrique (1) fonctionnant comme un générateur et qui amène l'appareil de commande de direction (2) et le capteur d'angle de direction (3) d'un état de repos à un état de fonctionnement pour capter le changement d'angle de rotation.

2. Dispositif selon la revendication 1, **caractérisé en ce que** l'électronique d'interprétation (4) amène l'appareil de commande de direction (2) et le capteur d'angle de direction (3) dans la position de repos après la détection du changement d'angle de rotation.

3. Dispositif selon la revendication 1 ou 2, **caractérisé en ce que** l'électronique d'interprétation (4) interprète le signal de tension en fonction de sa grandeur et/ou de son signe et, en fonction d'une valeur de seuil prédéterminée, fait passer l'appareil de commande de direction (2) et le capteur d'angle de direction (3) dans la position de fonctionnement.

4. Dispositif selon l'une des revendications 1 à 3, **caractérisé en ce que** l'électronique d'interprétation (4) est reliée à l'appareil de commande de direction (2) par une ligne d'excitation (6).

5. Dispositif selon l'une des revendications 1 à 4, **caractérisé en ce que** l'électronique d'interprétation (4) alimente l'appareil de commande de direction (2) en tension.

6. Dispositif selon l'une des revendications 1 à 5, **caractérisé en ce que** l'électronique d'interprétation (4) est intégrée dans l'appareil de commande de direction (2).

7. Dispositif selon l'une des revendications 1 à 6, **caractérisé en ce que** l'appareil de commande de direction calcule et mémorise une valeur d'angle de direction actualisée sur la base du changement d'angle de rotation.
